# EUROPÄISCHE PATENTANMELDUNG

(11) **EP 3 988 501 A1**
(43) Veröffentlichungstag der Anmeldung: **27.04.2022**
(21) Anmeldenummer: 20020488.1
(22) Anmeldetag: 22.10.2020
(51) Int. Cl.: C01B 3/36

(54) **VERFAHREN UND ANLAGE ZUM HERSTELLEN VON CO-REICHEM SYNTHESEGAS DURCH PARTIALOXIDATION**

(71) Anmelder: L'Air Liquide Société Anonyme pour l'Etude et l'Exploitation des Procédés Georges Claude, 75321 Paris (FR)
(72) Erfinder: Müller-Hagedorn, Matthias, D-60388 Frankfurt am Main (DE); Aras, Gökhan, D-60388 Frankfurt am Main (DE); Schlichting, Holger, D-60388 Frankfurt am Main (DE)
(74) Vertreter: Dropsch, Holger

(57) **Zusammenfassung**

Es wird ein Verfahren und eine Anlage zur Herstellung eines Wasserstoff und Kohlenoxide enthaltenden Synthesegases durch partielle, nichtkatalytische Oxidation eines fluiden oder fluidisierbaren, kohlenstoffhaltigen Einsatzstroms fossilen Ursprungs als erster Einsatzstrom in Gegenwart eines sauerstoffhaltigen Oxidationsmittels und optional eines Moderators vorgeschlagen, wobei ein CO-reiches Rohsynthesegas erhalten wird. Erfindungsgemäß wird ein zweiter Einsatzstrom, umfassend ein aus Biomasse gewonnenes Pyrolyseöl, gleichzeitig mit dem ersten Einsatzstrom in der nichtkatalytischen Partialoxidation umgesetzt.

## Beschreibung

### Gebiet der Erfindung

Die Erfindung betrifft ein Verfahren zur Herstellung eines Wasserstoff und Kohlenoxide umfassenden Synthesegases mit hohem Anteil an Kohlenmonoxid (CO) durch partielle Oxidation fester, flüssiger oder gasförmiger, kohlenstoffhaltiger Einsatzströme fossilen Ursprungs, beispielsweise flüssiger Brennstoffe wie Erdöl, Schweröl oder Erdölfolgeprodukten, in Gegenwart eines sauerstoffhaltigen Oxidationsmittels, beispielweise Luft, Sauerstoff oder sauerstoffangereicherte Luft, und eines Moderators, enthaltend Wasserdampf und/oder Kohlendioxid. Die Erfindung betrifft ferner eine Anlage zur Durchführung des erfindungsgemäßen Verfahrens sowie ein Verfahren zum Nachrüsten einer bestehenden Anlage zur nichtkatalytischen Partialoxidation.

### Stand der Technik

Als Synthesegase bezeichnet man Wasserstoff und Kohlenoxide enthaltende Gasgemische, die in verschiedenen Synthesereaktionen Verwendung finden. Beispiele hierfür sind die Methanolsynthese, die Herstellung von Ammoniak nach dem Haber-Bosch-Verfahren oder die Fischer-Tropsch-Synthese.

Ein gängiges Verfahren zur Herstellung von Synthesegasen ist die autotherme Flugstromvergasung von gasförmigen, flüssigen oder festen Brennstoffen durch partielle nichtkatalytische Oxidation mit einem sauerstoffhaltigen Oxidationsmittel, wie sie beispielsweise in der Patentveröffentlichung DE 10 2006 059 149 B4 beschrieben ist. Am Kopf eines Reaktors sind zentral ein Zünd- und Pilotbrenner sowie rotationssymmetrisch zur Reaktorachse mehrere Vergasungsbrenner angeordnet. Über die Vergasungsbrenner wird einem Vergasungsraum des Reaktors der Brennstoff mit Sauerstoff und Dampf als Vergasungsmittel zugeführt, in dem der Brennstoff zu Synthesegas umgesetzt wird. Das heiße Vergasungsgas verlässt gemeinsam mit der flüssigen Schlacke den Vergasungsraum und gelangt in einen Quenchraum als Abkühlzone, in den zur schlagartigen Abkühlung von Rohsynthesegas und Schlacke Wasser eingedüst wird. Das als Quenchmittel verwendete Wasser sammelt sich im unteren Teil des Quenchraums als Wasserbad, so dass sich im unteren Bereich des Quenchraums ein Quenchwasserfüllstand ausbildet. Die Schlacke lagert sich im Wasserbad ab und wird über einen Schlackeaustrag abgeführt. Das gequenchte Rohsynthesegas wird wasserdampfgesättigt aus dem Quenchraum abgezogen und in nachfolgenden Reinigungsstufen gereinigt. Da der Brennstoff direkt mit dem Oxidationsmittel umgesetzt wird, werden Oxidationsmittel und Brennstoff koaxial oder koannular zugeführt.

Je nach den verwendeten Einsatzstoffen und den Vergasungsbedingungen wird bei der Vergasung ferner Ruß in Form von Rußpartikeln erzeugt. Diese lagern sich ebenfalls in dem Wasserbad ab.

Spezielle Technologien zur Vergasung von flüssigen und gasförmigen Brennstoffen wurden bereits Ende der 1940er Jahre von Texaco und Anfang der 1950er Jahre von Shell entwickelt. In späteren Jahren hat Lurgi mit der Vermarktung einer dritten Technologie begonnen, die als Mehrzweckvergasung (MPG) bekannt ist und die ursprünglich aus dem Kohlevergasungsprozess entwickelt wurde, um die dort produzierten Teere zu entsorgen.

Bestimmte Schlüsselmerkmale vieler Vergasungsverfahren sind ähnlich. Viele Vergasungsreaktoren sind als Flugstromreaktoren ausgestaltet und arbeiten bei Betriebstemperaturen im Bereich von 1250 bis 1450 ° C. Beim Betrieb mit flüssigen Einsatzstoffen erzeugen solche Prozesse eine geringe Menge an Restkohlenstoff, was notwendig ist, um die Asche aus dem Reaktor abzuscheiden. Die wesentlichen Unterschiede zwischen den Prozessen liegen in den Details des Brennerdesigns, bei der Methode der Syngas-Kühlung und bei der Rußhandhabung.

Im Texaco-Prozess wird das Öl-Einsatzmaterial mit Dampf als Moderator vermischt und in einem Heizer vorgewärmt. Der Texaco-Brenner ist wassergekühlt, in dem Dampf und Öl über einen Ringschlitz, der das zentrale Sauerstoffrohr umgibt, zusammengeführt werden.

Der Prozessdampf wird verwendet, um das Öl-Einsatzmaterial zu zerstäuben, und eine gute Vermischung wird dadurch gewährleistet, dass den beiden Strömen eine gegenläufige Wirbelbewegung verliehen wird. Der Reaktor selbst ist ein leeres, feuerfest ausgekleidetes Gefäß. Die Rußproduktion beträgt ca. 1 bis 2 Gew.-% bezogen auf den Brennstoffeinsatz.

In einer Variante des Texaco-Prozesses wird das erzeugte Roh-Synthesegas durch direktes Abschrecken bzw. schlagartiges Abkühlen im direkten Wärmetausch ("Quenchen") mit Wasser als Quenchmittel gekühlt. In diesem Quench-Modus verlässt das heiße Rohsynthesegas den Boden des Reaktors über ein Tauchrohr in den Quenchabschnitt. Das gequenchte Synthesegas ist mit Wasser gesättigt und verlässt den Quenchabschnitt mit einer Temperatur von etwa 250 °C.

Die hohe Wasserbeladung macht das gequenchte Gas zur CO-Konvertierung ohne weitere Dampfzugabe geeignet. Der Quench entfernt den Hauptanteil der Feststoffe, wie beispielsweise Ruß im Gas, und diese werden aus dem Quenchgefäß als Rußwasseraufschlämmung oder "Schwarzwasser" ausgeleitet.

Üblicherweise werden dabei als Einsatzstoffe für die beschriebenen Partialoxidations- bzw. Vergasungsverfahren Kohlenwasserstoffe mit fossilem Ursprung wie Erdgas oder Erdölfolgeprodukte (z. B. Vakuumdestillationsrückstände) eingesetzt. Auch Kohle kann in feinpartikulärer, fluidisierter Form verwendet werden, entweder dispergiert in einer Gasströmung (Flugstrom) oder dispergiert in einer Flüssigkeit (Aufschlämmung, Slurry). Nachteilig an diesen Verfahren ist die Nutzung von fossilen, nicht erneuerbaren Ressourcen sowie die Freisetzung von Treibhausgasen, die sowohl direkt während des Synthesegaserzeugungsprozess sowie am Ende des Lebenszyklus aus den daraus hergestellten Produkten erfolgt.

Forschung und Entwicklung zielen daher darauf ab, erneuerbare, kohlendioxidfreie oder kohlendioxidarme Verfahren zur Erzeugung von Synthesegas zu entwickeln. Ein solches Verfahren ist beispielsweise das Bioliq-Verfahren des Karlsruhe Institute of Technology, das z. B. in der Patentveröffentlichung DE 10151054 A1 beschrieben ist. Ausgehend von fester Biomasse erfolgt zunächst eine Schnellpyrolyse der Biomasse. Die dabei entstehenden festen und flüssigen Pyrolyseprodukte werden zu einer pumpfähigen Dispersion vermengt und können so einem Hochdruckvergaser zugeführt und mit Sauerstoff zu Synthesegas ungesetzt werden. Nachteilig ist dabei jedoch die verfahrenstechnisch aufwändige Separation der entstehenden Schlacke vom Synthesegas sowie deren Ausschleusung aus dem Hochdruckprozess. Zusätzlich ist der Reaktor in Analogie zur Flugstromkohlevergasung mit einer wassergekühlten Membranwand im Reaktor ausgestattet, die den thermischen Wirkungsgrad des Verfahrens reduziert.

Ein alternatives Verfahren, bei dem jedoch nur die flüssigen Produkte der Pyrolysestufe verwendet werden, wird in der Patentveröffentlichung WO 9942540 A1 beschrieben. Dabei ist die Tatsache von Bedeutung, dass in der chemischen Industrie große Mengen an Synthesegas hergestellt und eingesetzt werden müssen, um ökonomisch rentabel zu arbeiten. Typische Vergasungsanlagen mit einer thermischen Leistung von beispielsweise 250 bis 1000 MW (einsatzstoffbezogen) entsprechen bei Holz als Einsatzstoff mit einem Heizwert von ca. 17 MJ/kg einem Einsatzstoffbedarf von rund 50 bis 200 t/h. Diese Einsatzstoffmenge ist häufig nicht ökonomisch und ökologisch vertretbar langfristig abzusichern.

Daher wurden bereits Verfahren zur gemeinsamen Einspeisung von aschereichen Einsatzstoffen wie beispielsweise Kohle mit Biomasse oder Pyrolyseöl vorgeschlagen; ein Beispiel hierfür offenbart die Patentveröffentlichung EP 2236587 A1. Solche Verfahren weisen aber den Nachteil auf, dass die Abtrennung der dabei entstehenden Schlacke vom produzierten Synthesegas verfahrenstechnisch aufwändig ist und durch die dabei verwendete Reaktorform, eine wassergekühlte Membranwand, ein geringerer Kaltgaswirkungsgrad erhalten wird. Bei diesen verschlackenden Verfahren wird eine vollkommen verglaste Schlacke erzeugt, die keine Auslaugbarkeit mehr aufweist. Für schwermetallhaltige Schlacken ist dies von Vorteil; bei der Verwendung von Biomasse werden so aber der Natur kontinuierlich essentielle Mineralstoffe wie beispielsweise Phosphor entzogen.

### Beschreibung der Erfindung

Die Aufgabe der vorliegenden Erfindung besteht daher darin, ein Verfahren zur Herstellung von CO-reichem Synthesegas durch Vergasung kohlenstoffhaltiger Brennstoffe vorzuschlagen, bei dem die oben erwähnten Nachteile vermieden werden.

Diese Aufgabe wird in einem ersten Aspekt der Erfindung durch ein Verfahren mit den Merkmalen des Anspruchs 1 gelöst. Weitere Aspekte des erfindungsgemäßen Verfahrens ergeben sich aus den besonderen Ausgestaltungen gemäß der abhängigen Verfahrensansprüche. Die Erfindung betrifft in weiteren Aspekten auch eine Anlage zur Durchführung des erfindungsgemäßen Verfahrens mit den Merkmalen des Anspruchs 1 sowie weiteren vorteilhaften Ausgestaltungen gemäß der abhängigen Anlagenansprüche. Ferner betrifft die Erfindung auch ein Verfahren zum Nachrüsten einer bestehenden Anlage zur nichtkatalytischen Partialoxidation.

Unter den Partialoxidationsbedingungen bzw. den Vergasungsbedingungen sind die dem Fachmann an sich bekannten Reaktions- und Verfahrensbedingungen, insbesondere von Temperatur, Druck und Verweilzeit, zu verstehen, wie sie detailliert im einschlägigen Schrifttum erörtert werden und bei denen mindestens ein Teilumsatz, bevorzugt allerdings technisch relevante Umsätze der Edukte in Synthesegasprodukte wie CO und Wasserstoff erfolgt.

Unter nichtkatalytischen Partialoxidationsreaktoren werden insbesondere Reaktionsapparate verstanden, wie sie im Fachbuch "Gasification", C. Higman, M. van der Burgt, Gulf Professional Publishing, Elsevier (2003), Kapitel 5.3 "Entrained-flow Gasifiers" und Kapitel 5.4 "Oil Gasification and Partial Oxidation of Natural Gas" beschrieben werden. Ihnen ist gemeinsam, dass die Umsetzung der Einsatzströme mit einem sauerstoffhaltigen Oxidationsmittel in einer Reaktionskammer mit einem oder mehreren Brennern erfolgt, denen sich stromabwärts eine Abkühlzone anschließt, die oft als Quenchkammer ausgestaltet ist. Die Reaktionskammer besteht im Wesentlichen aus einem feuerfest ausgemauerten oder zugestellten Leervolumen, dessen Wände in einigen Ausgestaltungen gekühlt werden und das insbesondere keinen festen Katalysator zur Förderung der Partialoxidationsreaktionen enthält.

Unter Fluidverbindung zwischen zwei Bereichen oder Anlagenteilen wird dabei jegliche Art von Verbindung verstanden, die es ermöglicht, dass ein Fluid, beispielsweise ein Reaktionsprodukt oder eine Kohlenwasserstofffraktion, von dem einen zu dem anderen der beiden Bereiche strömen kann, unbeachtlich etwaiger zwischengeschalteter Bereiche, Bauteile oder benötigter Fördermittel.

Als Fluide werden Substanzen bezeichnet, die sich unter dem Einfluss von Scherkräften kontinuierlich verformen, so dass sie fließen. Der Begriff "fluidisierbar" weist in diesem Zusammenhang darauf hin, dass feinteilige, beispielsweise partikelförmige Feststoffe wie Schüttungen, durch verfahrenstechnische Maßnahmen wie Vermischen in einen fluidähnlichen Zustand verbracht werden, so dass sie förderfähig oder förderbar sind und sich gemeinsam mit der fluiden Phase bewegen.

Zerstäuben, auch Sprühen oder Versprühen genannt, ist das Zerteilen einer Flüssigkeit in feine Tröpfchen als Aerosol (Nebel, Spray) in einem Gas als Zerstäubungsmittel. Die für das Zerteilen der Flüssigkeit benötigte Energie wird der kinetischen Energie des Zerstäubungsmittels entnommen.

Unter einem Mittel wird eine Sache verstanden, die die Erreichung eines Zieles ermöglicht oder dabei behilflich ist. Insbesondere werden unter Mitteln zum Durchführen eines bestimmten Verfahrensschrittes alle diejenigen physischen Gegenstände verstanden, die der Fachmann in Betracht ziehen würde, um diesen Verfahrensschritt durchführen zu können. Beispielsweise wird der Fachmann als Mittel zum Einleiten oder Ausleiten eines Stoffstroms alle Transport- und Fördervorrichtungen, also z. B. Rohrleitungen, Pumpen, Verdichter, Ventile, in Betracht ziehen, die ihm aufgrund seines Fachwissens zur Durchführung dieses Verfahrensschrittes notwendig oder sinnvoll erscheinen.

Die genannten Aggregatzustände fest, flüssig und gasförmig bzw. dampfförmig sind immer in Bezug auf die lokalen physikalischen Bedingungen zu verstehen, die bei dem jeweiligen Verfahrensschritt oder in dem jeweiligen Anlagenteil herrschen, sofern nichts anderes angegeben ist. Im Rahmen der vorliegenden Anmeldung sind die Aggregatzustände gasförmig bzw. dampfförmig als synonym zu betrachten.

Mit dem Begriff Biomasse wird die Stoffmasse von Lebewesen oder deren Teile bzw. Körperteile bezeichnet. Im Rahmen der vorliegenden Erfindung wird darunter insbesondere lignocellulosehaltige Biomasse verstanden. Kennzeichen der Biomasse ist ihre fortlaufende Erneuerbarkeit durch Nachwachsen.

Unter kohlenstoffhaltigen Einsatzströmen oder Einsatzmaterialien fossilen Ursprungs werden solche Energieträger oder Einsatzstoffe, insbesondere Kohlenstoff enthaltende Einsatzstoffe verstanden, die in geologischer Vorzeit aus Abbauprodukten von abgestorbenen Pflanzen und Tieren entstanden sind. Dazu gehören Braunkohle, Steinkohle, Torf, Erdgas und Erdöl. Eine fortlaufende Erneuerbarkeit durch Nachwachsen ist demnach bei Einsatzmaterialien fossilen Ursprungs nicht gegeben.

Die Angabe, dass zwei oder mehrere Einsatzströme gleichzeitig in einem chemischen Reaktor umgesetzt werden, bezieht sich darauf, dass beide Einsatzströme zur selben Zeit dem Reaktor zugeführt werden und - nach Umsetzung mit dem Reaktionspartner, beispielsweise Sauerstoff - ein gemeinsames Reaktionsprodukt aus dem Reaktor abgeführt wird.

Unter einem Synthesegas mit hohem Anteil an Kohlenmonoxid bzw. einem CO-reichen Synthesegas wird ein Synthesegas verstanden, das als Rohsynthesegas, also unmittelbar am Ausgang des Synthesegaserzeugungsreaktors, ein höheres molares CO/H₂-Verhältnis aufweist als ein typisches Rohsynthesegas, das mittels Dampfreformierung (Steamreforming) von kohlenwasserhaltigen Einsatzströmen, beispielsweise Erdgas, gewonnen wurde. Insbesondere wird unter einem Synthesegas mit hohem Anteil an Kohlenmonoxid bzw. einem CO-reichen Synthesegas ein Synthesegas mit einem molaren H₂/CO-Verhältnis kleiner als 2,1 verstanden.

Druckangaben in der Einheit bar(a) beziehen sich auf den Absolutdruck in bar, absolut.

Pyrolyseöle entstehen bei der Pyrolyse, insbesondere bei der Schnellpyrolyse (synonym Flash-Pyrolyse, Blitzpyrolyse) von Biomasse als Einsatzstoff. Hierbei erfolgt die Umsetzung zu den Pyrolyseprodukten unter Sauerstoffausschluss, insbesondere bei der Schnellpyrolyse innerhalb weniger Sekunden, bei Temperaturen von ca. 400 bis 600 °C, typischerweise um 500 °C, wobei flüssige (Pyrolyseöl), feste (Biokoks) und ein Restanteil gas- oder dampfförmige Pyrolyseprodukte erhalten werden. Einzelheiten zu der Durchführung des Verfahrens finden sich beispielsweise in den internationalen Patentanmeldungen WO 2003/033624 A1 und WO 2007/017005 A1. Die Schnellpyrolyse ist eine spezielle Verfahrensform, mit der hohe Pyrolyseölanteile bei wenig Koks erzielbar sind.

Pyrolyseöle sind niedrigviskose Flüssigkeiten mit einer dunkelroten bis dunkelbraunen Farbe. Ihre Herstellung und Eigenschaften werden beispielsweise in dem Fachbuch "Energie aus Biomasse: Grundlagen, Techniken und Verfahren", M. Kaltschmitt, H. Hartmann, Springer Verlag, Berlin (2001), Seite 491 ff. beschrieben. Demnach können Pyrolyseöle bis zu 38 % Wasser enthalten, das sowohl aus der Restfeuchte des Rohstoffes stammt als auch durch die Spaltungsreaktionen gebildet wird. In der Hauptsache bestehen die Pyrolyseöle aus einer Mischung von Alkoholen, Furanen, Aldehyden, Phenolen, organischen Säuren sowie oligomeren Kohlenhydrat- und Ligninprodukten. Chemisch gesehen bestehen sie damit aus mehreren hundert Einzelkomponenten mit folgenden funktionellen Gruppen: organische Säuren, Aldehyde, Ester, Acetale, Halbacetale, Alkohole, Olefine, Aromaten und Phenole. Die Zusammensetzung ist abhängig von Einsatzmaterial, dem verwendeten Pyrolyseverfahren, Abscheidungssystem und Lagerbedingungen. Pyrolyseöle weisen im Vergleich zu Kohlenstoffträgern fossilen Ursprungs einen hohen Sauerstoffanteil von typischerweise rund 40 bis 60 Gew.-% auf, oder bezogen auf wasserfreies Öl typischerweise 20 bis 30 Gew.-%, wogegen der Sauerstoffanteil von leichtem und schwerem Heizöl nur im Spurenbereich, beispielsweise bei 0,01 Gew.-% liegt.

Der Aschegehalt von Pyrolyseölen beträgt typischerweise 0,01 bis 0,2 Gew.-% und liegt damit leicht über demjenigen von leichtem und schwerem Heizöl von typischerweise 0,01 Gew.-%. Die Ermittlung des Aschegehalts erfolgt mittels normierter Verfahren, beispielsweise gemäß der Norm DIN 51719 (Pyrolyseöl) bzw. ISO 6245 (Erdöl und Erdölfolgeprodukte).

Unter Erdölfolgeprodukten werden alle Stoffe und Stoffgemische verstanden, die einstufig oder zumeist mehrstufig als Zielprodukte (z. B. leichtes und schweres Heizöl) oder als Neben- bzw. Abfallprodukte (z. B. schwere Residuen wie Crackerrückstand) ausgehend von Erdöl erhalten werden.

Ein besonderes Merkmal des erfindungsgemäßen Verfahrens ist die Nutzung eines flüssigen biomassestämmigen Einsatzstoffes als zweiter Einsatzstrom, der aschearm und sauerstoffreich ist. Aufgrund seines niedrigen Aschegehaltes kann er daher in einem ausgemauerten Hochtemperaturvergasungsreaktor eingesetzt werden, so dass ein hoher Kaltgaswirkungsgrad erzielbar ist. Der hohe Sauerstoffgehalt in der molekularen Struktur des flüssigen biomassestämmigen Einsatzstoffes ermöglicht eine sehr geringe Ruß- oder Koksbildung während der Umsetzung zu Synthesegas. Bevorzugt ist dabei der flüssige biomassestämmige Einsatzstoff ein Pyrolyseöl.

Ein weiteres besonderes Merkmal des erfindungsgemäßen Verfahrens besteht darin, dass dieser flüssige biomassestämmige Einsatzstoff zusätzlich zu Erdgas oder Erdöl, einer Erdölfraktion oder einem Erdölfolgeprodukt als erster Einsatzstrom dem Verfahren zugeführt wird und im selben Reaktor durch gleichzeitige nichtkatalytische Partialoxidation umgesetzt wird. Damit kann eine ökonomisch notwendige Anlagengröße erzielt werden.

Es hat sich gezeigt, dass insbesondere die Erzeugung von Kohlenmonoxid (CO) aus Erdgas mittels einer nichtkatalytischen Partialoxidation von kohlenstoffhaltigen Gasen, beispielsweise Erdgas, mit gleichzeitiger Umsetzung von Pyrolyseöl besonders vorteilhaft ist, da sich hierbei das Kohlenmonoxid/Wasserstoff-Verhältnis im Rohsynthesegas erhöht, ohne dass eine Verringerung der hydrodynamischen Verweilzeit auftritt, die sich negativ auf dem Umsatz im Reaktor auswirkt.

Anbieter von aus Biomasse erzeugtem Pyrolyseöl sind auf dem Markt bekannt. Die angebotenen Pyrolyseöle weisen einen vom Wassergehalt abhängigen Heizwert von typischerweise 16 bis 20 MJ/kg und nur einen sehr geringen Stickstoff-, Schwefel- und Aschegehalt auf. Ihre Mischbarkeit mit Wasser oder Kohlenwasserstoffen ist sehr eingeschränkt. Mit Wasser tritt eine Phasentrennung ab einem Wassergehalt von 25 bis 30 Gew.% auf. Mit Kohlenwasserstoffen sind diese Pyrolyseöle nur sehr gering mischbar. Daher können diese Öle nicht mit Kohlenwasserstoffen gemischt und gemeinsam einer Vergasung zugeführt werden. Eine Verdampfung ist aufgrund ihrer Reaktionsneigung zur Polymerisation und Cracken nicht möglich, da sich dabei ein koksartiger Feststoff bildet.

Daher wird bei dem hier beschriebenen Verfahren Pyrolyseöl als zweiter Einsatzstrom separat zu dem Partialoxidation zugeführt und dort gleichzeitig mit dem Einsatzstrom und dem Oxidationsmittel zu einem Rohsynthesegas umgesetzt. Der erste Einsatzstrom kann dabei ein kohlenstoffhaltiges Gas, beispielsweise Erdgas, oder eine kohlenstoffhaltige Flüssigkeit, beispielsweise Erdöl, eine Erdölfraktion oder ein Erdölfolgeprodukt sein.

Die erfindungsgemäße Anlage umfasst dabei entweder einen Gas-Partialoxidationsreaktor oder einen Öl-Partialoxidationsreaktor, vorzugsweise mit ausgemauerter Reaktionskammer. Dabei erfolgt die Zugabe des Pyrolyseöls erfindungsgemäß über eine getrennte Zuführleitung mit geeigneten Regeleinrichtungen entweder zu einem oder mehreren Brennern in der Reaktionskammer oder einer oder mehrerer separater, von den Brennern getrennten Injektionseinrichtungen.

Im Falle der Zugabe über einen oder mehrere Brenner weisen die Brenner einen eigenen internen Kanal für das Pyrolyseöl auf, wobei die Brenner auch interne Kanäle für den ersten Einsatzstrom, für das Oxidationsmittel sowie gegebenenfalls für einen Moderator, beispielsweise Dampf oder Kohlendioxid aufweisen. Die Zerstäubung des Pyrolyseöls kann mittels des Moderators oder mittels des ersten Einsatzstroms erfolgen, falls dieser gasförmig ist. Besonders bevorzugt ist es, die internen Zuführkanäle ringraumförmig auszugestalten, mit Ausnahme des innersten Kanals, der einen kreisförmigen Querschnitt aufweist. Die einzelnen Kanäle werden dabei bevorzugt koaxial-konzentrisch um den innersten Kanal angeordnet. Es wird bevorzugt, wenn durch geeignete Ausgestaltung eine Zerstäubung des zweiten Einsatzstroms bereits im Brennerinneren, also vor Austritt aus dem Brenner in die Reaktionskammer erfolgt.

Im Falle der Zugabe mittels einer oder mehrerer separater, von den Brennern getrennten Injektionseinrichtungen sind diese vorzugsweise als Zuführlanzen ausgestaltet und neben dem oder den Brennern in des Reaktionskammer angeordnet. Prinzipiell sind bei dieser Anordnung alle möglichen Massenverhältnisse von erstem zu zweitem Einsatzstrom möglich. Bevorzugt sind aber insbesondere Zuführmassenströme des zweiten Einsatzstroms von beispielsweise 1 bis 10 t/h, um der Biomasseverfügbarkeit Rechnung zu tragen.

In beiden Fällen der Zugabe des zweiten Einsatzstromes wird es bevorzugt, die Zuführleitung mit einer Zerstäubungsvorrichtung auszustatten. Dabei haben sich Zweistoff-Zerstäuberdüsen, wie sie beispielsweise in den Patentveröffentlichungen DE 10156980 A1 oder EP 2523899 A1 als Teil eines Partialoxidationsbrenners für flüssige Brennstoffe beschrieben werden, als vorteilhaft erwiesen.

Für eine weitere Energieoptimierung des erfindungsgemäßen Verfahrens oder zur Reduktion der Viskosität und somit zur Verbesserung der Förderfähigkeit kann das Pyrolyseöl vorgewärmt werden. Hierfür sind zahlreiche Verfahren bekannt. Aufgrund der thermischen Instabilität des Pyrolyseöls eigenen sich insbesondere Verfahren, die eine schonende Vorwärmung sicherstellen.

### Bevorzugte Ausgestaltungen der Erfindung

In einem zweiten Aspekt der Erfindung ist das Verfahren dadurch gekennzeichnet, dass die Abkühlzone als Quench oder als Abhitzekessel oder als Kombination beider ausgestaltet ist. Aufgrund des typischerweise geringen Anteils an anorganischen Verbindungen im Pyrolyseöl, insbesondere Kalium und Calcium, ist es vorteilhaft, die Abkühlzone als Quench auszugestalten, da Kalium bei Partialoxidationsbedingungen teilweise in der Gasphase vorliegt und bei Verwendung eines Abhitzekessels zur Erzeugung von Hochdruckdampf in den Wärmeübertragerrohren auskondensieren und so zu Verstopfungen führen kann. Gleichzeitig erfolgt mittels des Quenchs eine schlagartige Abkühlung des Rohsynthesegases mit dem Quenchmedium und das Rohsynthesegas wird an Partikeln, insbesondere an Ruß- und Kokspartikeln abgereichert. Dagegen ist ein Abhitzekessel oft günstiger hinsichtlich seiner höheren Effektivität hinsichtlich der Energierückgewinnung. Besonders bevorzugt ist eine Kombination beider Abkühlvorrichtungen, wobei in Strömungsrichtung des Rohsynthesegases zuerst ein Quench angeordnet wird, der für eine Teilabkühlung und Partikelabreicherung sorgt. Ein nachgeschalter Abhitzekessel dient der weiteren Energierückgewinnung; durch die Vorreinigung des Rohsynthesegases im Quench ist das Verschmutzungsrisiko für den Abhitzekessel verringert. Dieser Aspekt betrifft auch eine entsprechende Ausgestaltung einer Anlage.

Wenn die Abkühlzone als Quench ausgestaltet ist, ist es weiterhin vorteilhaft, dass Pyrolyseöl als zweiter Einsatzstrom einen geringen Ascheanteil aufweist, wobei der Ascheanteil Elemente wie Na, K, Mg, Ca enthält, die basische bzw. alkalische Oxide bzw. Hydroxide bilden. Da sie sich im Quenchwasser ganz oder teilweise lösen, erhöhen sie dort dessen pH-Wert und können acide Spurenverunreinigungen des Synthesegases, beispielsweise Ameisensäure, neutralisieren. Hierdurch erhöht sich die Standzeit der verwendeten Konstruktionsmaterialien bzw. es können kostengünstigere, weniger korrosionsresistente Materialien verwendet werden.

In einem dritten Aspekt der Erfindung ist das Verfahren dadurch gekennzeichnet, dass die Abkühlzone als Quench ausgestaltet ist und weiterhin folgende Schritte umfasst werden:
(e1) Beaufschlagen des heißen Rohsynthesegasstroms in der Abkühlzone mit einem kalten, Wasser enthaltendem Quenchmittelstrom, wobei ein kalter Rohsynthesegasstrom und ein Strom heißen Quenchmittels erhalten werden,
(e2) Ausleiten des heißen, flüssigen Quenchmittelstroms aus der Abkühlzone und Einleiten mindestens eines Teils des heißen Quenchmittelstroms in einen ersten Wärmetauscher zwecks Abkühlung des heißen Quenchmittelstroms durch indirekten Wärmetausch gegen ein erstes Kühlmittel unter Erhalt des kalten Quenchmittelstroms,
(e3) Ausleiten des kalten Quenchmittelstroms aus dem ersten Wärmetauscher und Rückführen mindestens eines Teils des kalten Quenchmittelstroms zu der Abkühlzone, wodurch ein Quenchmittelstrom-Kreislauf gebildet wird. Dieser Aspekt betrifft auch eine entsprechende Ausgestaltung einer Anlage.

Dieser Ausgestaltung liegt die Erkenntnis zugrunde, dass der heiße Quenchmittelstrom ausreichend Energie zur Vorwärmung des kohlenstoffhaltigen Einsatzstromes, des Oxidationsmittelstromes sowie eines optionalen Moderatorstromes zur Verfügung stellen kann. Diese Ausgestaltung ermöglicht die Nutzung des bislang als Wärmeträger ungenutzten Wassers. Dabei ist insbesondere bei thermisch instabilen oder zu Verkokung neigenden flüssigen Einsatzstoffen eine Temperaturspitzen vermeidende, möglichst gleichmäßige Vorwärmung auf einem Temperaturniveau von ca. 200 °C möglich. Insbesondere wenn der Einsatzstoff zu thermisch induzierten Reaktionen, beispielsweise Polymerisationen neigt, wie dies z. B. bei Pyrolyseöl der Fall ist, ist die Verwendung dieses Wärmeträgers vorteilhaft, da die Vorwärmung auf einem geringeren Temperaturniveau erfolgt als bei der Vorwärmung mit Hochdruckdampf.

In einem vierten Aspekt der Erfindung ist das Verfahren dadurch gekennzeichnet, dass der Massenstrom-Anteil des zweiten Einsatzstroms an der Summe der Massenströme von erstem und zweitem Einsatzstrom mindestens 5 Gew.-%, bevorzugt mindestens 10 Gew.-% beträgt. Aufgrund des im Vergleich zu fossilen Einsatzstoffen erhöhten Sauerstoffanteils des Pyrolyseöls verringert sich hierdurch die einzusetzende Menge des Oxidationsmittels signifikant. Wenn zudem der Massenstrom-Anteil des zweiten Einsatzstroms an der Summe der Massenströme von erstem und zweitem Einsatzstrom einen Wert von höchstens 40 Gew.-%, bevorzugt von höchstens 30 Gew.-% nicht überschreitet, kann eine bestehende Anlage für die Partialoxidation des ersten Einsatzstroms in einfacher Weise dadurch nachgerüstet werden, dass eine Zuleitung für den zweiten Einsatzstrom vorgesehen wird, ohne dass eine grundsätzliche Änderung des Anlagendesigns, beispielsweise der Reaktionskammer und/oder der Abkühlzone, vorgenommen werden muss. Insbesondere bietet dies die Möglichkeit, den Mengenstrom des ersten Einsatzstroms, beispielsweise von Erdgas, zu reduzieren und gleichzeitig den Mengenstrom des zweiten Einsatzstroms zu erhöhen, so dass die Produktionskapazität des Verfahrens bzw. der Anlage gleich bleibt, aber durch das höhere C/H-Verhältnis des zweiten Einsatzstroms ein CO-reicheres Synthesegas entsteht.

In einem fünften Aspekt der Erfindung ist das Verfahren dadurch gekennzeichnet, dass der erste Einsatzstrom einen Aschegehalt von höchstens 5 Gew.-%, bevorzugt von höchstens 1 Gew.-%, meist bevorzugt von höchstens 0,1 Gew.-% aufweist. Da Pyrolyseöl als zweiter Einsatzstrom selbst ebenfalls einen niedrigen Aschegehalt von beispielsweise 0,01 bis 0,20 Gew.-% aufweist, kann die Feststoffabscheidung aus dem Rohsynthesegas entsprechend einfacher und kleiner ausgestaltet werden oder es kann ganz auf sie verzichtet werden.

In einem sechsten Aspekt der Erfindung ist das Verfahren dadurch gekennzeichnet, dass erste Einsatzstrom Erdgas, Erdöl oder mindestens ein flüssiges oder gasförmiges Erdölfolgeprodukt umfasst. Diese Einsatzstoffe bilden die Grundlage von Partialoxidationsverfahren, wie sie bereits aus dem Stand der Technik, beispielsweise dem Fachbuch "Gasification", C. Higman, M. van der Burgt, Gulf Professional Publishing, Elsevier (2003), bekannt sind. Vorteile bietet dabei insbesondere die Verwendung von Erdölfolgeprodukten mit niedrigem Wert, beispielsweise Crackerrückständen, die ansonsten aufwändig entsorgt werden müssten.

In einem siebten Aspekt der Erfindung ist das Verfahren dadurch gekennzeichnet, dass der erste Einsatzstrom Erdöl oder mindestens ein flüssiges Erdölfolgeprodukt jeweils mit suspendierten oder fluidisierten kohlenstoffhaltigen Feststoffpartikeln umfasst. Dabei kann es sich um eigene, beispielsweise suspendierte Feststoffanteile der genannten Produkte oder um zusätzlich zugefügte Feststoffanteile handeln, beispielsweise Kokspartikel, die im Rahmen von Raffinerie- oder petrochemischen Verfahren oder als feste Produkte der Biomasse-Pyrolyse erhalten wurden. Wichtig ist es dabei, dass festgelegte Aschegehalte, beispielsweise die mit dem fünften Aspekt der Erfindung offenbarten Aschegehalte nicht überschritten werden, um die dort genannten Vorteile zu gewährleisten. Der Aschegehalt bezieht sich dabei auf die Summe der Aschegehalte des Erdöls bzw. Erdölfolgeprodukts und der darin dispergierten Feststoffe.

In einem achten Aspekt der Erfindung ist das Verfahren dadurch gekennzeichnet, dass der zweite Einsatzstrom einen Aschegehalt von höchstens 1 Gew.-%, bevorzugt von höchstens 0,2 Gew.-%, meist bevorzugt von höchstens 0,1 Gew.-% aufweist. Dies ist in der Regel unproblematisch, da Pyrolyseöl als zweiter Einsatzstrom selbst ebenfalls einen niedrigen Aschegehalt von beispielsweise 0,01 bis 0,20 Gew.-% aufweist. Somit kann die Feststoffabscheidung aus dem Rohsynthesegas entsprechend einfacher und kleiner ausgestaltet werden oder es kann ganz auf sie verzichtet werden.

In einem neunten Aspekt der Erfindung ist das Verfahren dadurch gekennzeichnet, dass der zweite Einsatzstrom einen Sauerstoffgehalt von mindestens 10 Gew.-%, bevorzugt von mindestens 20 Gew.-%, meist bevorzugt von mindestens 30 Gew.-% aufweist, jeweils bezogen auf wasserfreies Pyrolyseöl. Der hohe Sauerstoffgehalt in der molekularen Struktur der Bestandteile des Pyrolyseöls als flüssiger biomassestämmiger Einsatzstoff ermöglicht eine sehr geringe Ruß- oder Koksbildung während der Umsetzung zu Synthesegas, da Stoffübergangslimitierungen des Sauerstoffs aus dem gasförmigen Oxidationsmittel zu den kohlenstoffhaltigen Reaktionspartnern insbesondere im Hinblick auf die begrenzte Verweilzeit des Reaktionsgemischs im Reaktor vermieden werden. Hierdurch verringert sich hierdurch die einzusetzende Menge des Oxidationsmittels signifikant.

In einem zehnten Aspekt der Erfindung ist das Verfahren dadurch gekennzeichnet, dass der zweite Einsatzstrom vor oder bei seinem Einleiten in die Reaktionskammer zerstäubt wird. Das Zerstäuben ermöglicht eine gleichmäßige, rußarme bzw. koksarme Umsetzung des Pyrolyseöls bei der Partialoxidation, da lokale Kohlenstoff-Überschüsse in Bezug auf die Konzentration des an dieser Stelle vorhandenen Oxidationsmittels vermieden werden. Ferner erfolgt durch das Zerstäuben des zweiten Einsatzstroms vor oder bei seinem Einleiten in die Reaktionskammer auch eine gute Durchmischung mit dem ersten Einsatzstrom. Hierdurch wird auch die gleichmäßige, rußarme bzw. koksarme Umsetzung des ersten, fossilstämmige Einsatzstromes bei der Partialoxidation begünstigt, der auf diese Weise von dem hohen Sauerstoffgehalt des Pyrolyseöls in besonderem Maße profitiert.

In einem elften Aspekt der Erfindung ist das Verfahren dadurch gekennzeichnet, dass der zweite Einsatzstrom vor oder bei seinem Einleiten in die Reaktionskammer zerstäubt wird, wobei als Zerstäubungsmittel dient:
- der Moderatorstrom und/oder
- mindestens ein Teil des ersten Einsatzstroms, falls dieser gasförmig ist.
Eine Verwendung des gasförmigen ersten Einsatzstroms, beispielsweise Erdgas, erbringt ebenfalls den Vorteil einer gleichmäßigen, rußarmen bzw. koksarmen Umsetzung aufgrund des hohen Sauerstoffgehalt des Pyrolyseöls, das auf diese Weise mit dem ersten Einsatzstrom bei oder vor dem Eintritt in den Brenner intensiv vorgemischt wird.

In einem zwölften Aspekt der Erfindung ist das Verfahren dadurch gekennzeichnet, dass der zweite Einsatzstrom über den mindestens einen Brenner in die Reaktionskammer eingeleitet wird, wobei der zweite Einsatzstrom über einen separaten Leitungskanal in den mindestens einen Brenner eingeleitet und mittels des Zerstäubungsmittels zerstäubt wird und im zerstäubten Zustand in die Reaktionskammer eingeleitet wird. Vorteilhaft ist dabei die platzsparende Konstruktion eines kombinierten Brenners für den ersten und zweiten Einsatzstrom. Separate Zuführlanzen für den zweiten Einsatzstrom werden nicht benötigt und somit eingespart. Besonders bevorzugt wird bei dieser Ausgestaltung der mindestens eine Brenner mit einer Vielzahl von Ringkanälen ausgestattet, die einen zentralen Kanal mit kreisförmigem Querschnitt koaxial und konzentrisch umgeben, wobei das Einleiten des zweiten Einsatzstroms in einen der Ringkanäle und/oder in den zentralen Kanal erfolgt.

In einem dreizehnten Aspekt der Erfindung ist das Verfahren dadurch gekennzeichnet, dass der zweite Einsatzstrom getrennt von dem mindestens einen Brenner über mindestens eine separate Zuführlanze in die Reaktionskammer eingeleitet wird, wobei der zweite Einsatzstrom mittels des Zerstäubungsmittels zerstäubt wird und im zerstäubten Zustand in die Reaktionskammer eingeleitet wird. Vorteilhaft ist es dabei, dass keine Änderungen der Ausgestaltung des Brenners gegenüber einem Betrieb des Partialoxidationsreaktor nur mit dem ersten Einsatzstrom erforderlich sind. Ferner werden auf diese Weise Betriebsabschnitte ermöglicht, in denen der Partialoxidationsreaktor entweder nur mit dem ersten Einsatzstrom oder mit dem ersten und dem zweiten Einsatzstrom beaufschlagt wird. Um das Zerstäuben des zweite Einsatzstroms zu erleichtern, ist es vorteilhaft, die Zuführlanzen mit einer Zerstäubervorrichtung auszustatten. Hierfür haben sich beispielsweise Zweistoff-Zerstäuberdüsen, wie sie beispielsweise in den Patentveröffentlichungen DE 10156980 A1 oder EP 2523899 A1 als Teil eines Partialoxidationsbrenners für flüssige Brennstoffe beschrieben werden, als vorteilhaft erwiesen.

Weiterhin ist es vorteilhaft, bei der Ausgestaltung gemäß des dreizehnten Aspekts der Erfindung die Zuführlanzen und Brenner auf einer gemeinsamen Stirnplatte zu montieren, die auf der Eintrittsseite der Reaktionskammer angebracht wird. Zuführlanzen und Brenner können auf diese Weise für Reparaturen und Revisionen besonders einfach demontiert und anschließend remontiert werden.

In einem vierzehnten Aspekt der Erfindung ist das Verfahren dadurch gekennzeichnet, dass das Massenverhältnis des Zerstäubungsmittels zum zweiten Einsatzstrom zwischen größer Null und 1 g/g, bevorzugt zwischen 0,1 und 0,5 g/g beträgt. Untersuchungen haben gezeigt, dass auf diese Weise ein guter Kompromiss zwischen effektiver, feindisperser Zerstäubung des zweiten Einsatzstroms einerseits und akzeptablem Verdünnungsgrad bei Verwendung des Moderators als Zerstäubungsmittel bzw. akzeptablem Überschuss des ersten Einsatzstroms andererseits erhalten wird.

Ein fünfzehnter, sechzehnter und siebzehnter Aspekt der Erfindung betrifft die Ausgestaltung einer Anlage gemäß des ersten, zweiten und dritten Aspekts des erfindungsgemäßen Verfahrens und weist die dort erläuterten Vorteile auf.

Ein achtzehnter Aspekt der Erfindung betrifft ein Verfahren zum Nachrüsten einer bestehenden Anlage zur nichtkatalytischen Partialoxidation eines ersten, kohlenstoffhaltigen Einsatzstroms fossilen Ursprungs als ersten Einsatzstrom, wobei die bestehende Anlage folgende Bestandteile umfasst:
(a) Mittel zum Bereitstellen des ersten, kohlenstoffhaltigen Einsatzstroms fossilen Ursprungs in fluider oder fluidisierter Form, Mittel zum Bereitstellen des Oxidationsmittelstroms, optional Mittel zum Bereitstellen eines Moderatorstroms, umfassend Wasserdampf und/oder Kohlendioxid,
(b) einen Partialoxidationsreaktor, umfassend eine Reaktionskammer mit einem Einlass und einem Auslass, mindestens einen am Einlass der Reaktionskammer angeordneten Brenner und eine stromabwärts des Auslasses der Reaktionskammer angeordnete und mit dieser in Fluidverbindung stehende Abkühlzone,
(c) Mittel zum Einleiten des ersten Einsatzstroms, des Oxidationsmittelstroms und des optionalen Moderatorstroms in den mindestens einen Brenner und Mittel zum Einleiten des zweiten Einsatzstroms in die Reaktionskammer über den mindestens einen Brenner oder über eine von dem mindestens einen Brenner getrennte Zuleitung,
(d) Mittel zum Ausleiten eines heißen Rohsynthesegasstroms aus der Reaktionskammer und Mittel zum Einleiten desselben in die Abkühlzone,
(e) Mittel zum Ausleiten eines kalten Rohsynthesegasstroms aus dem Partialoxidationsreaktor,
dadurch gekennzeichnet, dass die bestehende Anlage zusätzlich mit einer Zuleitung für ein Pyrolyseöl als zweiten Einsatzstrom ausgestattet wird, wobei die Zuleitung für den zweiten Einsatzstrom in den mindestens einen Brenner mündet oder getrennt von dem mindestens einen Brenner direkt in die Reaktionskammer mündet und die Zuleitung so ausgestaltet ist, dass der zweite Einsatzstrom vor oder bei seinem Einleiten in die Reaktionskammer zerstäubt wird.
Vorteilhaft ist es dabei, dass die bestehende Anlage zur nichtkatalytischen Partialoxidation des ersten, kohlenstoffhaltigen Einsatzstroms fossilen Ursprungs weitgehend weiterverwendet werden kann. Es müssen lediglich Modifikationen vorgenommen werden, die die Zuführung des zweiten Einsatzstromes betreffen.

In einem weiteren Aspekt der Erfindung ist das Verfahren ist dadurch gekennzeichnet, dass die Abkühlzone als Quench ausgestaltet ist und weiterhin folgende Schritte umfasst werden:
(e1) Beaufschlagen des heißen Rohsynthesegasstroms in der Abkühlzone mit einem kalten, Wasser enthaltendem Quenchmittelstrom, wobei ein kalter Rohsynthesegasstrom und ein Strom heißen, flüssigen, mit Feststoffpartikeln beladenen Quenchmittels erhalten werden,
(e2) Ausleiten des heißen, flüssigen, mit Feststoffpartikeln beladenen Quenchmittelstroms aus der Abkühlzone und Einleiten mindestens eines Teils des heißen Quenchmittelstroms in einen ersten Wärmetauscher zwecks Abkühlung des heißen Quenchmittelstroms durch indirekten Wärmetausch gegen ein erstes Kühlmittel unter Erhalt des kalten Quenchmittelstroms, wobei der erste Wärmetauscher ausgewählt ist aus der Gruppe:
   - Kreuzstromwärmetauscher, wobei das Kühlmittel durch Rohre geführt wird, die von dem heißen Quenchmittelstrom umströmt werden,
   - Rohrbündelwärmetauscher, wobei das Kühlmittel die Rohrseite durchströmt und der heiße Quenchmittelstrom die Mantelseite durchströmt,
   - Spiralwärmetauscher,
      wobei als erstes Kühlmittel mindestens ein Stoffstrom dient, der ausgewählt wird aus der Gruppe:
      erster Einsatzstrom, zweiter Einsatzstrom, Oxidationsmittelstrom, Moderatorstrom,
      wobei der oder die Stoffströme dabei vor dem Einleiten in den Partialoxidationsreaktor vorgewärmt werden,
(e3) Ausleiten des kalten Quenchmittelstroms aus dem ersten Wärmetauscher und Rückführen mindestens eines Teils des kalten Quenchmittelstroms zu der Abkühlzone, wodurch ein Quenchmittelstrom-Kreislauf gebildet wird. Dieser Aspekt betrifft auch eine entsprechende Ausgestaltung einer Anlage.

Vorteilhaft ist es dabei, dass der heiße Quenchmittelstrom ausreichend Energie zur Vorwärmung des kohlenstoffhaltigen Einsatzstromes, des Oxidationsmittelstromes sowie eines optionalen Moderatorstromes zur Verfügung stellt und mit dieser Ausgestaltung auch bei Beladung mit Feststoffpartikeln als Wärmeträger genutzt werden kann. Dabei ist insbesondere bei thermisch instabilen oder zu Verkokung neigenden flüssigen Einsatzstoffen eine temperaturspitzenvermeidende, möglichst gleichmäßige Vorwärmung auf einem Temperaturniveau von ca. 200 °C möglich. Insbesondere wenn der Einsatzstoff zu thermisch induzierten Reaktionen, beispielsweise Polymerisationen neigt, wie dies z. B. bei Pyrolyseöl der Fall ist, ist die Verwendung dieses Wärmeträgers vorteilhaft, da die Vorwärmung auf einem geringeren Temperaturniveau erfolgt als bei der Vorwärmung mit Hochdruckdampf. Ferner kann auf diese Weise ein weiterer Betriebsmittelstrom vorgewärmt werden und es besteht ein zusätzlicher Freiheitsgrad bei der Einstellung der Vorwärmtemperatur für diesen zusätzlichen Betriebsmittelstrom.

Im Rahmen des letztgenannten Aspekts der Erfindung ist es ferner vorteilhaft, wenn der Quenchmittelstrom vor dem Rückführen zu der Abkühlzone einer Vorrichtung zur Feststoffabscheidung zugeführt wird. Dies verringert die Verstopfungsneigung der für das Einleiten des kalten Quenchmittels in die Abkühlkammer verwendeten Vorrichtungen, beispielsweise Düsen.

In einem weiteren Aspekt der Erfindung ist das Verfahren dadurch gekennzeichnet, dass mindestens ein zweiter Wärmetauscher zur Abkühlung des heißen Quenchmittelstroms durch indirekten Wärmetausch vorhanden ist, wobei der zweite Wärmetauscher mit einem zweiten Kühlmittel betrieben wird, das ausgewählt wird aus der Gruppe: Kohlenstoffhaltiger Einsatzstrom, Oxidationsmittelstrom, Moderatorstrom. Auf diese Weise kann ein weiterer Betriebsmittelstrom vorgewärmt werden und es besteht ein zusätzlicher Freiheitsgrad bei der Einstellung der Vorwärmtemperatur für diesen zusätzlichen Betriebsmittelstrom. Dieser Aspekt betrifft auch eine entsprechende Ausgestaltung einer Anlage.

In einem weiteren Aspekt der Erfindung ist das Verfahren dadurch gekennzeichnet, dass der Druck in der Reaktionskammer und in der Abkühlzone zwischen 15 und 100 bar(a), bevorzugt zwischen 25 und 70 bar(a) liegt und die Gastemperatur in der Reaktionskammer zwischen 1000 und 1800 °C, bevorzugt zwischen 1250 und 1500 °C liegt. Der gewählte Druck ergibt sich insbesondere aus der nachfolgenden Nutzung des Synthesegases unter Berücksichtigung z. B. des Kompressionsaufwands. Ferner wird die Wahl des Drucks durch die Berücksichtigung des Volumens der benötigten Apparate, Behälter und Rohrleitungen und deren erforderlicher Wandstärke beeinflusst. Hinsichtlich der Temperatur stellt der Bereich zwischen 1250 und 1500 °C, insbesondere der Bereich zwischen größer 1250 und 1450 °C den Bereich dar, bei dem eine weitgehende Umsetzung der Einsatzströme zu Synthesegas erfolgt, so dass hinsichtlich der Thermodynamik und der Reaktionskinetik der Restmethangehalt gering ist und ferner auch Ruß weitgehend umgesetzt wird.

In einem weiteren Aspekt der Erfindung ist das Verfahren dadurch gekennzeichnet, dass die Vorwärmtemperatur des kohlenstoffhaltigen Einsatzstroms vor Einleiten in den Partialoxidationsreaktor für gasförmige Einsatzströme zwischen 200 und 400 °C, für flüssige Einsatzströme zwischen 150 und 300 °C und für Pyrolyseöl zwischen 20 und 150 °C beträgt. Insbesondere für Erdgas als erstem Einsatzstrom ergibt sich die Vorwärmtemperatur aus den Anforderungen der dem Vergasungsreaktor vorgeschalteten Entschwefelung, beispielsweise durch Adsorption auf ZnO und einer etwa vorhandenen Hydrierung. Typische Arbeitstemperaturen für eine adsorptive Entschwefelung auf ZnO liegen um 300 °C.

In einem weiteren Aspekt der Erfindung ist das Verfahren dadurch gekennzeichnet, dass die Vorwärmtemperatur des sauerstoffhaltigen Oxidationsmittels vor Einleiten in den Brenner zwischen 120 und 250 °C beträgt.
Prinzipiell wäre es günstig, die Vorwärmtemperatur des sauerstoffhaltigen Oxidationsmittels möglichst hoch zu wählen. Bei hohen Temperaturen werden geeignete Wärmeträger und geeignete Materialien benötigt. Bei Verwendung von reinem Sauerstoff als Oxidationsmittel ist bedingt durch dessen hohe Reaktivität die Verwendung entsprechender oxidationsbeständiger Konstruktionsmaterialien erforderlich und es sind in verstärktem Maße Sicherheitsaspekte zu beachten, vor allem im Brennernahbereich.

### Ausführungsbeispiel

Weiterbildungen, Vorteile und Anwendungsmöglichkeiten der Erfindung ergeben sich auch aus der nachfolgenden Beschreibung von Ausführungs- und Zahlenbeispielen und der Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
- Fig. 1: eine Ausgestaltung eines Vergasungsverfahrens bzw. einer entsprechenden Anlage durch nichtkatalytische partielle Oxidation (POX) gemäß Stand der Technik,
- Fig. 2: eine Ausgestaltung eines Vergasungsverfahrens durch nichtkatalytische partielle Oxidation (POX) gemäß der Erfindung,
- Fig. 3: eine Ausgestaltung eines Brenners für die nichtkatalytische partielle Oxidation (POX) gemäß der Erfindung,
- Fig. 4: ein Beispiel für eine erfindungsgemäße Ausgestaltung einer Brennerstirnplatte mit mehreren Brennern und einer Injektionslanze.

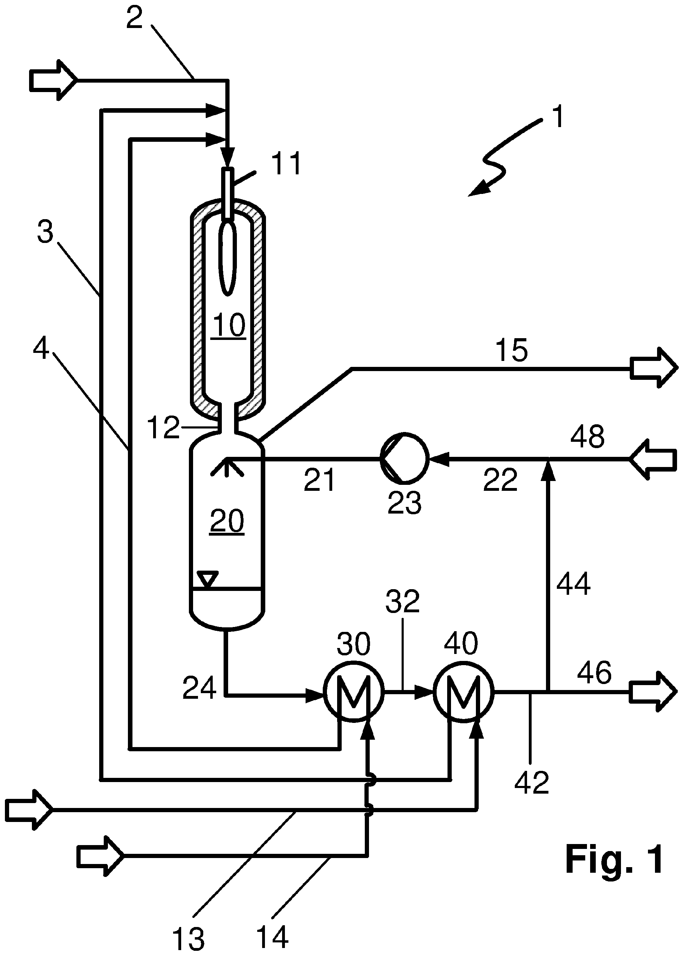

In der in Fig. 1 schematisch dargestellten Anlage 1 zur Synthesegaserzeugung gemäß Stand der Technik durch nichtkatalytische Partialoxidation beispielsweise von Erdöl oder eines Erdölfolgeprodukts, beispielsweise eines Crackerrückstands, als flüssiger, kohlenstoffhaltiger, erster Einsatzstrom werden der Reaktionskammer 10 über den Brenner 11 der erste Einsatzstrom über Leitungen 13 und 3, Wasserdampf als Moderator über Leitung 2 und Sauerstoff als Oxidationsmittel über Leitungen 14 und 4 zugeführt. Die detaillierte Medienführung ist in der Figur bildlich nicht dargestellt; so kann stromaufwärts des Brenners oder im Brenner selber eine Vorvermischung eines oder mehrerer der Medien, beispielsweise des Pyrolyseöls oder des Oxidationsmittels oder beider, mit dem Moderator erfolgen, wobei als Moderator Wasserdampf oder Kohlendioxid oder Mischungen dieser Stoffe verwendet wird.

Die Umsetzung des ersten Einsatzstroms mit dem Oxidationsmittel zu einem Rohsynthesegas erfolgt unter Partialoxidationsbedingungen im Brenner 11 und/oder in der stromabwärts des Brenners angeordneten Reaktionskammer 10 zu einem heißen Rohsynthesegasstrom.

Das Rohsynthesegas tritt über Verbindungsleitung 12 in die Abkühlkammer 20 ein, die als Quench ausgestaltet ist. Hier erfolgt die schlagartige Absenkung der Temperatur des Rohsynthesegases durch Versprühen von Wasser, das über Leitungen 21 und 22 als kalter Quenchmittelstrom herangeführt wird, auf eine Temperatur zwischen 150 und 250 °C bei einem typischen Druck zwischen 25 und 80 bar(a). Das dabei erhaltene, abgekühlte und von Feststoffpartikeln, beispielsweise Ruß- oder Kokspartikeln, weitgehend befreite Rohsynthesegas wird nachfolgend über Leitung 15 aus der Partialoxidationsanlage ausgeleitet und der Weiterverarbeitung oder Weiterbehandlung zugeführt.

Das heiße, flüssige, gegebenenfalls mit Feststoffpartikeln beladene Quenchmittel sammelt sich im unteren Bereich der Abkühlkammer und bildet dort einen Flüssigkeitsstand. Das heiße Quenchmittel wird sodann über Leitung 24 aus der Abkühlkammer 20 ausgeleitet und über Leitung 24 zum ersten Wärmetauscher 30 geführt. Falls das heiße Quenchmittel wie gezeigt am tiefsten Punkt der Abkühlkammer 20 ausgeleitet wird und es einen signifikanten Anteil an Feststoffpartikeln enthält, ist es von Vorteil, es zunächst einer bildlich nicht dargestellten Vorrichtung zur Feststoffabtrennung aufzugeben, um zumindest einen Teil der mitgeführten Feststoffpartikel abzuscheiden, bevor das heiße Quenchmittel weiter zum ersten Wärmetauscher 30 geführt wird.

Im ersten Wärmetauscher 30 erfolgt eine erste Teilabkühlung des heißen Quenchmittels im indirekten Wärmetausch gegen den über Leitung 14 herangeführten Oxidationsmittelstrom als erstes Kühlmittel, das auf diese Weise vorerwärmt und über Leitung 4 zum Brenner 11 geführt wird. Das teilabgekühlte Quenchmittel wird dann über Leitung 32 zu einem zweiten Wärmetauscher 40 geführt. Im zweiten Wärmetauscher 40 erfolgt die weitere Teilabkühlung des Quenchmittels im indirekten Wärmetausch gegen den über Leitung 13 herangeführten ersten Einsatzstrom als zweites Kühlmittel, das auf diese Weise ebenfalls vorerwärmt und über Leitung 3 zum Brenner 11 geführt wird.

Das kalte Quenchmittel wird über Leitung 42 aus dem zweiten Wärmetauscher 40 ausgeleitet und über Leitungen 44, 22, 21 und Pumpe 23 als kaltes Quenchmittel zu der Abkühlkammer 20 zurückgeführt, wodurch ein geschlossener Quenchmittelkreislauf gebildet wird. Dabei wird ein gegenüber dem umlaufenden Mengenstrom des Quenchmittels kleiner Anteil kontinuierlich über Leitung 46 aus dem Verfahren ausgeleitet, um eine Kontamination des zirkulierenden Quenchmittels durch Feststoff-Feinanteile und unerwünschte gelöste Stoffe zu begrenzen. Der ausgeleitete Mengenstrom des Quenchmittels wird kontinuierlich über Leitung 48 durch Frischwasser ersetzt.

Besondere Vorteile bietet die gezeigte Wahl des ersten und des zweiten Kühlmittels: Das gegenüber einer Überhitzung weniger empfindliche Oxidationsmittel trifft als erstes Kühlmittel im ersten Wärmetauscher auf den noch heißen Quenchmittelstrom, während im zweiten Wärmetauscher das bereits teilabgekühlte Quenchmittel mit dem Kohlenwasserstoffe enthaltenden ersten Einsatzstrom als zweites Kühlmittel weiter abgekühlt wird. Auf diese Weise wird der erste Einsatzstrom als kohlenstoffhaltiger Einsatzstrom zwar vorgewärmt, aber eine Überhitzung vermieden, die aufgrund der Reaktivität einiger Inhaltsstoffe zu unerwünschten Nebenreaktionen führen kann.

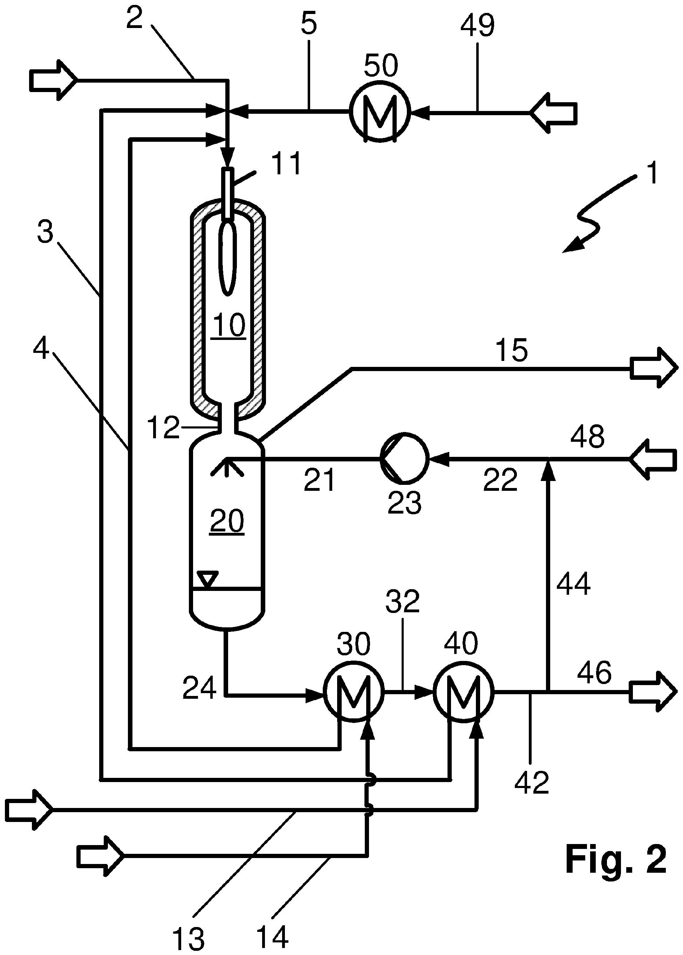

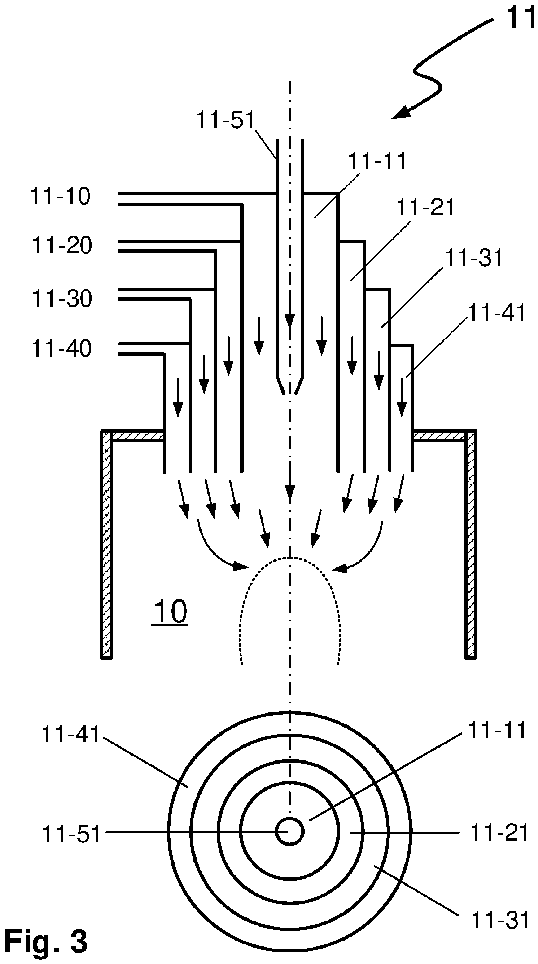

In der in Fig. 2 gezeigten Ausgestaltung eines Vergasungsverfahrens durch nichtkatalytische partielle Oxidation (POX) gemäß der Erfindung entsprechen alle Zeichenelemente und deren Bezugszeichen denjenigen der Fig. 1, soweit sie bereits im Zusammenhang mit der dort erläuterten Ausgestaltung erwähnt wurden. Neu und erfindungsgemäß hinzu treten Leitungen 5 und 49, über die ein Pyrolyseöl als zweiter Einsatzstrom zu Leitung 2 und weiter zum Brenner 11 geführt wird. Die in Fig. 2 gezeigte Führung des zweiten Einsatzstroms ist dabei rein schematisch zu verstehen; ein detaillierteres Beispiel der Zuführung des zweiten Einsatzstroms zum Brenner 11 zeigt nachfolgend Fig. 3.

Vor der Zuführung zum Brenner wird der zweite Einsatzstrom bevorzugt vorgewärmt, beispielsweise mittels eines Wärmetauschers 50. Auch hier kann beispielsweise der bereits teilabgekühlte Quenchmittelstrom in Leitung 32 oder 42 als Wärmeträger dienen (bildlich nicht gezeigt). Besonders bevorzugt ist es, den bereits relativ weit abgekühlten Quenchmittelstrom in Leitung 42 als Wärmeträger zur Vorwärmung des zweiten Einsatzstroms zu verwenden. Auf diese Weise wird der zweite Einsatzstrom als kohlenstoffhaltiger Einsatzstrom zwar vorgewärmt, aber eine Überhitzung vermieden, die aufgrund der Reaktivität einiger Inhaltsstoffe zu unerwünschten Nebenreaktionen führen kann. Da der zweite Einsatzstrom in der Regel eine höhere Konzentration reaktiver, zu unerwünschten Nebenreaktionen neigender Inhaltsstoffe enthält, ist es bevorzugt, für die Vorwärmung des zweiten Einsatzstroms einen kälteren Wärmeträgerstrom zu verwenden als für die Vorwärmung des ersten Einsatzstroms. Besonders bevorzugt ist es daher, den Wärmetauscher 50 stromabwärts des Wärmetausches 40 anzuordnen, falls in beiden Wärmetauschern der Quenchmittelstrom als Wärmeträger dienen soll.

Fig. 3 zeigt schematisch ein Beispiel des Aufbaus eines Brenners 11 gemäß einer erfindungsgemäßen Ausführungsform der Erfindung. Dem im oberen Teil der Fig. 3 in der Seitenansicht bildlich dargestellten, erfindungsgemäßen Brenner 11 werden über Leitung 11-10 Dampf als Moderator, über Leitung 11-20 Sauerstoff als Oxidationsmittel, über Leitung 11-30 nochmals Dampf als Moderator und über Leitung 11-40 Erdgas als erster Einsatzstrom zugeführt. Über die zentrale Leitung 11-51 wird dem Brenner Pyrolyseöl als zweiter Einsatzstrom zugeführt. Die zentrale Leitung 11-51 ist an ihrem Ende als Zerstäubungsvorrichtung ausgestaltet und mündet bereits vor Eintritt in die Reaktionskammer 10, also noch im Inneren des Brenners 11, in den sie koaxial und konzentrisch umgebenden Ringkanal 11-11 ein, in dem Dampf geführt wird, der als Zerstäubungsmittel für den zweiten Einsatzstrom dient, so dass das Pyrolyseöl bereits im Brennerinneren zerstäubt wird. Die weiteren Ringkanäle 11-21 (Sauerstoff), 11-31 (Dampf) und 11-41 (Erdgas) sind alle ebenfalls koaxial und konzentrisch angeordnet. Dies ist im unteren Teil der Fig. 3 nochmals als Draufsicht auf einen Querschnitt durch den Brenner dargestellt. Erdgas, Sauerstoff, Dampf als Moderator und das Gemisch aus Moderator und zerstäubtem Pyrolyseöl treten über die entsprechenden Leitungen bzw. Ringspalte aus dem Brenner aus und in die Reaktionskammer ein, was durch Strömungspfeile schematisch angedeutet ist. In der Reaktionskammer läuft die Partialoxidationsreaktion zwischen dem ersten und zweiten Einsatzstrom und dem Sauerstoff als Oxidationsmittel unter Flammenbildung (gepunktet angedeutet) ab.

Durch die erfindungsgemäße Medienführung innerhalb des Brenners wird eine gleichmäßige, rußarme bzw. koksarme Umsetzung des ersten, fossilstämmigen Einsatzstroms und des Pyrolyseöls als zweiter Einsatzstrom bei der Partialoxidation begünstigt. Die Umsetzung des ersten Einsatzstroms profitiert dabei von dem hohen Sauerstoffgehalt des zweiten Einsatzstroms. Vorteilhaft ist ferner die platzsparende Konstruktion eines kombinierten Brenners für den ersten und zweiten Einsatzstrom. Separate Zuführlanzen für den zweiten Einsatzstrom werden nicht benötigt und somit eingespart.

Weitere konstruktive Bestandteile des Brenners, beispielsweise benötigte Kühlvorrichtungen und Zuleitungen für entsprechende Kühlmedien, werden in Fig. 3 wegen der stark schematischen Darstellungsweise nicht gezeigt. Der Fachmann wird sie anhand seines Fachwissens ergänzen, falls und wo sie benötigt werden oder Vorteile bieten.

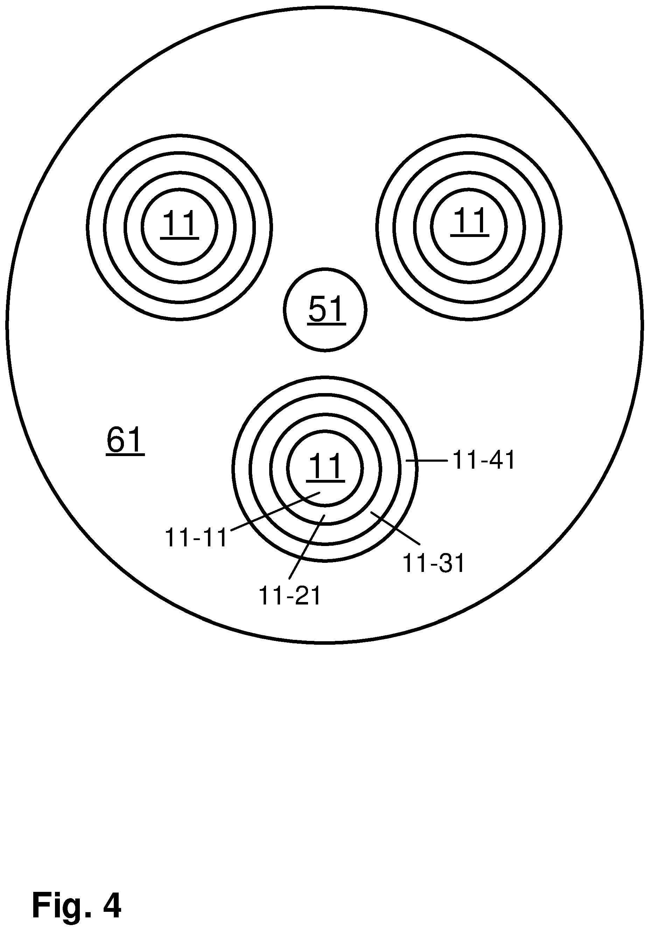

Fig. 4 zeigt schematisch ein weiteres Beispiel einer erfindungsgemäßen Ausführungsform der Erfindung als Draufsicht auf einen Querschnitt der Vorrichtung. Auf einer gemeinsamen Brennerstirnplatte 61 sind drei Brenner 11 symmetrisch angeordnet. Der Aufbau der Brenner entspricht demjenigen der Fig. 3 mit den Ringkanälen 11-11, 11-21, 11,31, 11-41, wobei nun aber die zentrale Leitung 11-51 entfällt. Alternativ kann die zentrale Leitung 11-51 auch beibehalten, aber nunmehr für die Zuleitung des ersten Zuführstroms, beispielsweise Erdgas, verwendet werden; dann könnte auf einen Ringkanal, beispielsweise den Ringkanal 11-41, verzichtet werden.

Im Mittelpunkt der kreisförmigen Stirnplatte 61 ist eine Zuführlanze 51 für Pyrolyseöl als zweiter Einsatzstrom angeordnet. Nicht bildlich dargestellt ist die Zuführleitung des Zerstäubungsmittels, beispielsweise Dampf. Bevorzugt umgibt diese die zentrale Zuleitung für das Pyrolyseöl als Ringkanal. Beide Zuleitungen münden in eine bildlich nicht gezeigte Zweistoff-Zerstäuberdüse als Zerstäubungsvorrichtung. Vorteilhaft ist es dabei, dass keine Änderungen der Ausgestaltung des Brenners gegenüber einem Betrieb des Partialoxidationsreaktor nur mit dem ersten Einsatzstrom erforderlich sind. Ferner werden auf diese Weise Betriebsabschnitte ermöglicht, in denen der Partialoxidationsreaktor entweder nur mit dem ersten Einsatzstrom oder mit dem ersten und dem zweiten Einsatzstrom beaufschlagt wird.

Die Anordnung der Zuführlanzen und der Brenner auf einer gemeinsamen Stirnplatte, die auf der Eintrittsseite der Reaktionskammer angebracht wird, weist den Vorteil auf, dass Zuführlanzen und Brenner auf diese Weise für Reparaturen und Revisionen besonders einfach demontiert und anschließend remontiert werden können.

### Zahlenbeispiel

Das folgende, mittels thermodynamischer Berechnungen erhaltene Zahlenbeispiel zeigt den positiven Einfluss der Zugabe von Pyrolyseöl als zweitem Einsatzstrom bei einer bestehenden Anlage zur Herstellung von CO-reichem Synthesegas durch Partialoxidation (POX) von Erdgas als erstem Einsatzstrom.

Im Vergleichsbeispiel wird eine Anlage zur nichtkatalytischen Partialoxidation (POX-Anlage) mit einer thermischen Eingangsleistung von 250 MW als Basisfall ohne Zugabe von Pyrolyseöl betrachtet. Dabei wird vorgewärmtes Erdgas zusammen mit Dampf und Recycleströmen als Einsatzstoff zusammen mit Sauerstoff als Oxidationsmittel zu einem Rohsynthesegas umgesetzt. Dabei entstehen 29,2 t/h CO und 3,8 t/h H₂ im Rohsynthesegas am Auslass des Reaktors. Insgesamt werden dem Reaktor 13,9 t/h fossiler Kohlenstoff in Form von Erdgas mit einem Methangehalt von 93 Vol.-% als erster Einsatzstrom zugeführt, so dass insgesamt 90 Gew.-% des Kohlenstoffs in Form von Methan zu der Partialoxidation geführt werden.

Im erfindungsgemäßen Zahlenbeispiel wird der POX-Anlage ebenfalls Erdgas mit einem Methangehalt von 90 Vol.-% als erster Einsatzstrom zugeführt, aber der erste Einsatzstrom soweit reduziert, dass bei einer Zugabe von 5,3 t/h Pyrolyseöl mit einem Heizwert von 20 MJ/kg (im Anlieferungszustand, mit 18 Gew.-% Wasser) und einem Kohlenstoffgehalt von 54,6 Gew.-% (wasserfrei) als zweiter Einsatzstrom die gleiche Masse an Kohlenmonoxid im Rohsynthesegas erzeugt werden kann. Der erste Einsatzstrom kann damit auf 85 % reduziert werden, so dass nur noch 11,8 t/h des Kohlenstoffträgers fossilen Ursprungs zur Erzeugung eines bestimmten CO-Massenstroms eingesetzt werden muss. Die thermische Eingangsleistung der Anlage verringert sich dadurch auf 242 MW. Gleichzeitig verringert sich die benötigte Sauerstoffmenge bei gleicher Reaktortemperatur um 6 %. Die Masse an erzeugtem Wasserstoff verringert sich dabei leicht um 6 %, beträgt aber noch 3,7 t/h. Damit ergibt sich eine Erhöhung des CO/H₂-Verhältnises im Synthesegas um 6 %.

Wird der Anteil an erneuerbaren Produkten nicht-fossilen Ursprungs durch die Differenz aus dem erfindungsgemäßen Zahlenbeispiel und 85 % des Vergleichsbeispiels berechnet, kann ein regenativer und somit CO₂-freier Anteil an dem insgesamt erzeugten CO von 15 % und von H₂ von 10 % ermittelt werden. Neben der Verringerung des Sauerstoffbedarfs bei der Vergasung von 6 % kann damit die gleiche Menge an CO bei einer Verringerung des fossilen Kohlenstoffbedarfs um 2,4 t/h hergestellt werden.

Die Erfindung ist insbesondere auch geeignet zur Nachrüstung bereits bestehender Anlagen für eine CO₂-arme Synthesegaserzeugung. In diesem Fall kann mit minimalen Investitionskosten zusätzliches CO und H₂ aus Biomasse hergestellt werden.

Ein weiterer Vorteil ergibt sich für Anlagen, deren Hauptprodukt CO ist. In diesen Anlagen wird das Rohsynthesegas aus der Vergasungsstufe zunächst typischerweise in einer Wäsche von CO₂ befreit und dann in einem kryogenen Verfahren (sog. Coldbox) in das Produkt CO und ein Restgas getrennt. Durch die Erhöhung des CO/H₂-Verhältnisses im Rohsynthesegas bei gleichzeitiger konstanter Gesamtmenge an Rohsynthesegas kann mit einer bestehenden und erfindungsgemäß nachgerüsteten Anlage mehr CO-Produkt hergestellt werden und/oder es ergeben sich geringere Verbrauchszahlen für das Gesamtverfahren.

### Bezugszeichenliste

- [1]: Anlage
- [2] - [5]: Leitung
- [10]: Reaktionskammer des Partialoxidationsreaktors

- [11]: Brenner
- [11-10]: Leitung
- [11-20]: Leitung
- [11-30]: Leitung
- [11-40]: Leitung
- [11-11]: Ringkanal
- [11-21]: Ringkanal
- [11-31]: Ringkanal
- [11-41]: Ringkanal
- [11-51]: zentrale Leitung

- [12] - [15]: Leitung
- [20]: Abkühlkammer des Partialoxidationsreaktors
- [13] - [15]: Leitung
- [21] - [22]: Leitung
- [23]: Pumpe
- [24]: Leitung
- [30]: erster Wärmetauscher
- [32]: Leitung
- [40]: zweiter Wärmetauscher
- [42] - [49]: Leitung
- [50]: dritter Wärmetauscher
- [51]: Zuführlanze
- [61]: Stirnplatte

## Patentansprüche

1. Verfahren zum Herstellen eines Wasserstoff und Kohlenoxide enthaltenden Rohsynthesegases durch gleichzeitige nichtkatalytische Partialoxidation
- eines fluiden oder fluidisierbaren, kohlenstoffhaltigen Einsatzstroms fossilen Ursprungs als ersten Einsatzstrom und
- eines zweiten Einsatzstroms, umfassend ein aus Biomasse gewonnenes Pyrolyseöl, mit einem sauerstoffhaltigen Oxidationsmittel in einem gemeinsamen, nichtkatalytischen Partialoxidationsreaktor, umfassend folgende Schritte:
(a) Bereitstellen des ersten Einsatzstroms in fluider oder fluidisierter Form, Bereitstellen des zweiten Einsatzstroms in flüssiger, förderbarer Form, Bereitstellen eines Oxidationsmittelstroms, optional Bereitstellen eines Moderatorstroms, umfassend Wasserdampf und/oder Kohlendioxid,
(b) Bereitstellen eines Partialoxidationsreaktors, umfassend eine Reaktionskammer mit mindestens einem Einlass und einem Auslass, mindestens einen an dem mindestens einen Einlass der Reaktionskammer angeordneten Brenner und eine stromabwärts des Auslasses der Reaktionskammer angeordnete und mit dieser in Fluidverbindung stehende Abkühlzone,
(c) Einleiten des ersten Einsatzstroms, des Oxidationsmittelstroms und des optionalen Moderatorstroms in die Reaktionskammer über den mindestens einen Brenner und Einleiten des zweiten Einsatzstroms in die Reaktionskammer über den mindestens einen Brenner oder über eine von dem mindestens einen Brenner getrennte Zuleitung,
(d) mindestens teilweises Umsetzen des ersten Einsatzstroms und des zweiten Einsatzstroms mit dem Oxidationsmittelstrom unter Partialoxidationsbedingungen im Brenner und/oder in der stromabwärts des Brenners angeordneten Reaktionskammer zu einem heißen Rohsynthesegasstrom,
(e) Ausleiten des heißen Rohsynthesegasstroms aus der Reaktionskammer und Einleiten desselben in die Abkühlzone,
(f) Ausleiten des kalten Rohsynthesegasstroms aus der Abkühlzone und aus dem Partialoxidationsreaktor zur Weiterverarbeitung oder Weiterbehandlung.

2. Verfahren nach Anspruch 1, **dadurch gekennzeichnet, dass** die Abkühlzone als Quench oder als Abhitzekessel oder als Kombination beider ausgestaltet ist.

3. Verfahren nach Anspruch 1 oder 2, **dadurch gekennzeichnet, dass** die Abkühlzone als Quench ausgestaltet ist und weiterhin folgende Schritte umfasst werden:
(e1) Beaufschlagen des heißen Rohsynthesegasstroms in der Abkühlzone mit einem kalten, Wasser enthaltendem Quenchmittelstrom, wobei ein kalter Rohsynthesegasstrom und ein Strom heißen Quenchmittels erhalten werden,
(e2) Ausleiten des heißen, flüssigen Quenchmittelstroms aus der Abkühlzone und Einleiten mindestens eines Teils des heißen Quenchmittelstroms in einen ersten Wärmetauscher zwecks Abkühlung des heißen Quenchmittelstroms durch indirekten Wärmetausch gegen ein erstes Kühlmittel unter Erhalt des kalten Quenchmittelstroms,
(e3) Ausleiten des kalten Quenchmittelstroms aus dem ersten Wärmetauscher und Rückführen mindestens eines Teils des kalten Quenchmittelstroms zu der Abkühlzone, wodurch ein Quenchmittelstrom-Kreislauf gebildet wird.

4. Verfahren nach einem der vorigen Ansprüche, **dadurch gekennzeichnet, dass** der Massenstrom-Anteil des zweiten Einsatzstroms an der Summe der Massenströme von erstem und zweitem Einsatzstrom mindestens 5 Gew.-%, bevorzugt mindestens 10 Gew.-% beträgt.

5. Verfahren nach einem der vorigen Ansprüche, **dadurch gekennzeichnet, dass** der erste Einsatzstrom einen Aschegehalt von höchstens 5 Gew.-%, bevorzugt von höchstens 1 Gew.-%, meist bevorzugt von höchstens 0,1 Gew.-% aufweist.

6. Verfahren nach einem der vorigen Ansprüche, **dadurch gekennzeichnet, dass** der erste Einsatzstrom Erdgas, Erdöl oder mindestens ein flüssiges oder gasförmiges Erdölfolgeprodukt umfasst.

7. Verfahren nach einem der vorigen Ansprüche, **dadurch gekennzeichnet, dass** der erste Einsatzstrom Erdöl oder mindestens ein flüssiges Erdölfolgeprodukt jeweils mit suspendierten oder fluidisierten kohlenstoffhaltigen Feststoffpartikeln umfasst.

8. Verfahren nach einem der vorigen Ansprüche, **dadurch gekennzeichnet, dass** der zweite Einsatzstrom einen Aschegehalt von höchstens 1 Gew.-%, bevorzugt von höchstens 0,2 Gew.-%, meist bevorzugt von höchstens 0,1 Gew.-% aufweist.

9. Verfahren nach einem der vorigen Ansprüche, **dadurch gekennzeichnet, dass** der zweite Einsatzstrom einen Sauerstoffgehalt von mindestens 10 Gew.-%, bevorzugt von mindestens 20 Gew.-%, meist bevorzugt von mindestens 30 Gew.-% aufweist, jeweils bezogen auf wasserfreies Pyrolyseöl.

10. Verfahren nach einem der vorigen Ansprüche, **dadurch gekennzeichnet, dass** der zweite Einsatzstrom vor oder bei seinem Einleiten in die Reaktionskammer zerstäubt wird.

11. Verfahren nach einem der vorigen Ansprüche, **dadurch gekennzeichnet, dass** der zweite Einsatzstrom vor oder bei seinem Einleiten in die Reaktionskammer zerstäubt wird, wobei als Zerstäubungsmittel dient:
- der Moderatorstrom und/oder
- mindestens ein Teil des ersten Einsatzstroms, falls dieser gasförmig ist.

12. Verfahren nach einem der vorigen Ansprüche, **dadurch gekennzeichnet, dass** der zweite Einsatzstrom über den mindestens einen Brenner in die Reaktionskammer eingeleitet wird, wobei der zweite Einsatzstrom über einen separaten Leitungskanal in den mindestens einen Brenner eingeleitet und mittels des Zerstäubungsmittels zerstäubt wird und im zerstäubten Zustand in die Reaktionskammer eingeleitet wird.

13. Verfahren nach einem der vorigen Ansprüche, **dadurch gekennzeichnet, dass** der zweite Einsatzstrom getrennt von dem mindestens einen Brenner über mindestens eine separate Zuführlanze in die Reaktionskammer eingeleitet wird, wobei der zweite Einsatzstrom mittels des Zerstäubungsmittels zerstäubt wird und im zerstäubten Zustand in die Reaktionskammer eingeleitet wird.

14. Verfahren nach einem der vorigen Ansprüche, **dadurch gekennzeichnet, dass** das Massenverhältnis des Zerstäubungsmittels zum zweiten Einsatzstrom zwischen größer Null und 1 g/g, bevorzugt zwischen 0,1 und 0,5 g/g beträgt.

15. Anlage zum Herstellen eines Wasserstoff und Kohlenoxide enthaltenden Rohsynthesegases durch gleichzeitige nichtkatalytische Partialoxidation
- eines festen, flüssigen oder gasförmigen, kohlenstoffhaltigen Einsatzstroms fossilen Ursprungs als ersten Einsatzstrom und
- eines Pyrolyseöls als zweiten Einsatzstrom
mit einem sauerstoffhaltigen Oxidationsmittel in einem gemeinsamen, nichtkatalytischen Partialoxidationsreaktor, wobei die Anlage folgende, miteinander in Fluidverbindung stehende Bestandteile umfasst:
(a) Mittel zum Bereitstellen des ersten Einsatzstroms in fluider oder fluidisierter Form, Mittel zum Bereitstellen des zweiten Einsatzstroms in flüssiger, förderbarer Form, Mittel zum Bereitstellen des Oxidationsmittelstroms, optional Mittel zum Bereitstellen eines Moderatorstroms, umfassend Wasserdampf und/oder Kohlendioxid,
(b) einen Partialoxidationsreaktor, umfassend eine Reaktionskammer mit einem Einlass und einem Auslass, mindestens einen am Einlass der Reaktionskammer angeordneten Brenner und eine stromabwärts des Auslasses der Reaktionskammer angeordnete und mit dieser in Fluidverbindung stehende Abkühlzone,
(c) Mittel zum Einleiten des ersten Einsatzstroms, des Oxidationsmittelstroms und des optionalen Moderatorstroms in den mindestens einen Brenner und Mittel zum Einleiten des zweiten Einsatzstroms in die Reaktionskammer über den mindestens einen Brenner oder über eine von dem mindestens einen Brenner getrennte Zuleitung,
(d) Mittel zum Ausleiten eines heißen Rohsynthesegasstroms aus der Reaktionskammer und Mittel zum Einleiten desselben in die Abkühlzone,
(e) Mittel zum Ausleiten eines kalten Rohsynthesegasstroms aus dem Partialoxidationsreaktor.

16. Anlage nach Anspruch 15, **dadurch gekennzeichnet, dass** die Abkühlzone als Quench oder als Abhitzekessel oder als Kombination beider ausgestaltet ist.

17. Anlage nach einem der vorigen Ansprüche, **dadurch gekennzeichnet, dass** die Abkühlzone als Quench ausgestaltet ist und die Anlage auch folgende Bestandteile umfasst:
(e1) Mittel zum Beaufschlagen des heißen Rohsynthesegasstroms in der Abkühlzone mit einem kalten, Wasser enthaltendem Quenchmittelstrom,
(e2) ein erster Wärmetauscher, Mittel zum Ausleiten eines heißen, flüssigen Quenchmittelstroms und eines kalten Rohsynthesegasstroms aus der Abkühlzone und Mittel zum Einleiten mindestens eines Teils des heißen Quenchmittelstroms in den ersten Wärmetauscher,
(e3) Mittel zum Ausleiten eines kalten Quenchmittelstroms aus dem ersten Wärmetauscher und Mittel zum Rückführen mindestens eines Teils des kalten Quenchmittelstroms zu der Abkühlzone, wodurch ein Quenchmittelstrom-Kreislauf gebildet wird.

18. Verfahren zum Nachrüsten einer bestehenden Anlage zur nichtkatalytischen Partialoxidation eines ersten, kohlenstoffhaltigen Einsatzstroms fossilen Ursprungs als ersten Einsatzstrom, wobei die bestehende Anlage folgende Bestandteile umfasst:
(a) Mittel zum Bereitstellen des ersten, kohlenstoffhaltigen Einsatzstroms fossilen Ursprungs in fluider oder fluidisierter Form, Mittel zum Bereitstellen des Oxidationsmittelstroms, optional Mittel zum Bereitstellen eines Moderatorstroms, umfassend Wasserdampf und/oder Kohlendioxid,
(b) einen Partialoxidationsreaktor, umfassend eine Reaktionskammer mit einem Einlass und einem Auslass, mindestens einen am Einlass der Reaktionskammer angeordneten Brenner und eine stromabwärts des Auslasses der Reaktionskammer angeordnete und mit dieser in Fluidverbindung stehende Abkühlzone,
(c) Mittel zum Einleiten des ersten Einsatzstroms, des Oxidationsmittelstroms und des optionalen Moderatorstroms in den mindestens einen Brenner und Mittel zum Einleiten des zweiten Einsatzstroms in die Reaktionskammer über den mindestens einen Brenner oder über eine von dem mindestens einen Brenner getrennte Zuleitung,
(d) Mittel zum Ausleiten eines heißen Rohsynthesegasstroms aus der Reaktionskammer und Mittel zum Einleiten desselben in die Abkühlzone,
(e) Mittel zum Ausleiten eines kalten Rohsynthesegasstroms aus dem Partialoxidationsreaktor,
**dadurch gekennzeichnet, dass** die bestehende Anlage zusätzlich mit einer Zuleitung für ein Pyrolyseöl als zweiten Einsatzstrom ausgestattet wird, wobei die Zuleitung für den zweiten Einsatzstrom in den mindestens einen Brenner mündet oder getrennt von dem mindestens einen Brenner direkt in die Reaktionskammer mündet und die Zuleitung so ausgestaltet ist, dass der zweite Einsatzstrom vor oder bei seinem Einleiten in die Reaktionskammer zerstäubt wird.
